# EUROPÄISCHE PATENTSCHRIFT

(11) **EP 2 929 647 B1**
(45) Veröffentlichungstag und Bekanntmachung des Hinweises auf die Patenterteilung: **09.10.2019**
(21) Anmeldenummer: 13801510.2
(22) Anmeldetag: 28.11.2013
(51) Int. Cl.: H04L 7/08, G01S 15/93, G01S 7/52, H04L 7/04, H04L 12/40

(54) **VERFAHREN ZUR SYNCHRONISATION VON SENSOREN AN EINEM DATENBUS**
METHOD FOR SYNCHRONIZATION OF SENSORS OF A DATA BUS
PROCÉDÉ DE SYNCHRONISATION DES CAPTEURS D'UN BUS DE DONNÉES

(30) Priorität: 04.12.2012 DE 102012023748
(43) Veröffentlichungstag der Anmeldung: 14.10.2015
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE)
(74) Vertreter: Enge, Sebastian
(86) Internationale Anmeldenummer: PCT/EP2013/074918
(87) Internationale Veröffentlichungsnummer: WO 2014/086647

(56) Entgegenhaltungen:
- EP-A1- 1 619 518
- EP-A1- 1 971 069
- EP-A1- 2 455 779
- WO-A1-03/008996
- DE-A1-102008 044 367

## Beschreibung

Die Erfindung betrifft ein Verfahren zur Synchronisation von Sensoren mit einem eigenständigen Zeitmesser, insbesondere für ultraschallbasierende Umfelderkennungssysteme in einem Fahrzeug, bei dem die Sensoren mit einem Steuergerät über ein Bus-System kommunizieren, nach dem Oberbegriff des Anspruchs 1.

Bei ultraschallbasierenden Umfelderkennungssystemen werden mehrere Ultraschallsensoren in einer Stoßstange eines Kraftfahrzeugs verbaut. Jeder Ultraschallsensor sendet dabei ein Ultraschallsignal aus, welches von einem möglichen Objekt bzw. Hindernis reflektiert wird und von dem gleichen oder einem anderen Ultraschallsensor empfangen wird, wobei die Laufzeiten der Ultraschallwellen mit einem Zeitmesser erfasst werden. Über eine geeignete Auswertung der Laufzeiten kann die Lage des erfassten Objekts bestimmt und das Umfelderkennungssystem als Parkassistent in einem Kraftfahrzeug genutzt werden.

Aus der DE 10 2008 045 190 A1 ist ein gattungsgemäßes Umfelderkennungssystem bekannt, bei dem mehrere Sensoren in einer vorderen und einer hinteren Stoßstange über einen Bus mit einem zentralen Steuergerät kommunizieren. Der Bus ist als LIN-Bus ausgebildet, wobei zur Triggerung des Messablaufs im jeweiligen Sensor mit einem eigenständigen Zeitmesser Triggerimpulse erzeugt werden. Dabei ist zum Abgleich der Sensoren vorgesehen, die Zeitmesser der jeweiligen Sensoren untereinander zu synchronisieren.

Als Zeitmesser kommen in den Sensoren Oszillatoren zum Einsatz, die zwar hochgenau arbeiten, im Betrieb aber einer Drift unterliegen. Dabei ist die tatsächliche Oszillatordrift von Sensor zu Sensor unterschiedlich; z. B. liegt eine auftretende Oszillatordrift bei +/-3%. Da jeder Oszillator eines Zeitmessers unterschiedlich stark driftet, können die von den Sensoren gemessenen Laufzeiten fehlerbehaftet sein. Dies führt bei einer Auswertung der Laufzeiten zur Abstandsberechnung eines Objektes zu erheblichen Schwankungen, mit der Folge, dass die Lage des Objektes nur ungenau berechnet werden kann.

Die EP 2 455 779 A1 offenbart ein Verfahren zur Synchronisierung der Zeitgeber mehrerer Sensoren zur Abstandsmessung, wobei der Abgleich der Synchronisierung auf einer Messung der zeitlichen Länge eines vorgegebenen Zeitfenstersberuht und die Daten der Sensoren auf Basis der Laufzeiten zu einem gemeinsamen Steuermodul erfolgt.

Der Erfindung liegt die Aufgabe zugrunde, die in einem ultraschallbasierenden Umfelderkennungssystem verwendeten Sensoren derart zu synchronisieren, dass eine auftretende Oszillatordrift des Zeitmessers keine wesentlichen Auswirkungen auf die Abstandsberechnung hat.

Die Erfindung geht von einem Verfahren zur Synchronisation von Sensoren mit einem eigenständigen Zeitmesser aus, insbesondere für ultraschallbasierende Umfelderkennungssysteme in einem Fahrzeug, bei dem die Sensoren mit einem Steuergerät über einen Bus mit einem vorgegebenen Protokoll kommunizieren, das zumindest ein Fenster vorgegebener zeitlicher Länge umfasst. Erfindungsgemäß ist vorgesehen, dass der Takt des Zeitmessers im Sensor mit dem Takt eines zentralen Zeitmessers im Steuergerät abgeglichen wird und aus dem Abgleich ein Korrekturfaktor für die Daten des Sensors berechnet wird, um die vom Sensor erfassten Laufzeiten der Ultraschallwellen zu korrigieren.

Erfindungsgemäß wird der Abgleich des Zeitmessers in einem Sensor dadurch erzielt, dass die zeitliche Länge eines Fensters im Protokoll des BUS vom Zeitmesser des Sensors selbst gemessen wird und der Sensor die von ihm gemessene Zeit zusammen mit den Daten des Sensors, also den erfassten Laufzeiten, dem Steuergerät übermittelt. Da das Steuergerät die zeitliche Länge des Fensters im Protokoll vorgegeben hat, kann das Steuergerät die vom Sensor gemessene Zeit mit der vorgegebenen Zeit des Fensters vergleichen, um so aus dem Vergleich der Zeiten einen Korrekturfaktor abzuleiten, der zur Korrektur der von dem Sensor gesendeten Daten, also der erfassten Laufzeiten, herangezogen wird.

In einfacher Weise kann so jedem vom Sensor gesendeten Datensatz die zeitnah vom Zeitmesser des Sensors gemessene Zeit des Zeitfensters im Protokoll zugeordnet werden. Das Steuergerät wird als Master die vorgegebene Zeit des vom Sensor gemessenen Fensters mit der tatsächlich gemessenen Zeit vergleichen und bei Auftreten einer Differenzzeit einen Korrekturfaktor berechnen, mit dem die gesendeten Daten des Sensors unmittelbar an den Takt des Steuergerätes angepasst werden können.

Der Vergleich der gemessenen Zeit des Fensters mit der vorgegebenen Zeit des Fensters sowie die Korrektur der vom Sensor gesendeten Daten selbst erfolgt im zentralen Steuergerät als Master.

In einfacher Weise kann für die Synchronisation des Taktes des Zeitmessers im Sensor ein Fenster im Header des Message Frames ausgewählt werden; zweckmäßig wird das im Header vorgesehene Synchronisationsfenster ausgewählt. Vorteilhaft kann jedes Fenster des Message Frames genutzt werden, so z. B. ein Datenfenster, das Fenster der Checksumme oder auch das Break-Fenster bzw. der Identifier. Einzige Voraussetzung für das ausgewählte Fenster ist, dass dessen zeitliche Länge fest vorgegeben ist, das Steuergerät als Master also die Zeit des Fensters kennt.

Vorteilhaft wird die gemessene Zeit des Fensters und der Datensatz des Sensors innerhalb eines gleichen Message Frames übermittelt, so dass die aktuelle Oszillatordrift zusammen mit den aktuellen Daten des Sensors übermittelt wird. Dies ermöglicht eine genaue Berechnung der Abstandswerte aus den vom Sensor übermittelten und ggf. korrigierten Laufzeiten.

Es kann ausreichend sein, dass die gemessene Zeit eines Fensters und der Datensatz des Sensors in aufeinanderfolgenden Message Frames übermittelt werden; bei nur geringer Oszillatordrift ist es auch ausreichend, die Zeit eines vorgegebenen Fensters in längeren zeitlichen Abständen zu messen, so z. B. nur bei jedem dritten oder fünften Message Frame.

Weitere Merkmale der Erfindung ergeben sich aus den weiteren Ansprüchen, der Beschreibung und der Zeichnung, in der nachfolgend ein im Einzelnen beschriebenes Ausführungsbeispiel der Erfindung dargestellt ist. Es zeigen:
- Fig. 1: eine schematische Ansicht eines Umfelderkennungssystems in einem Fahrzeug,
- Fig. 2: in schematischer Darstellung einen "Message Frame" auf einer Bus-Leitung,
- Fig. 3: ein schematisches Ablaufdiagramm zur Funktionsweise einer Synchronisierung des Zeitmessers in einem Sensor mit einem zentralen Zeitmesser in einem Steuergerät.

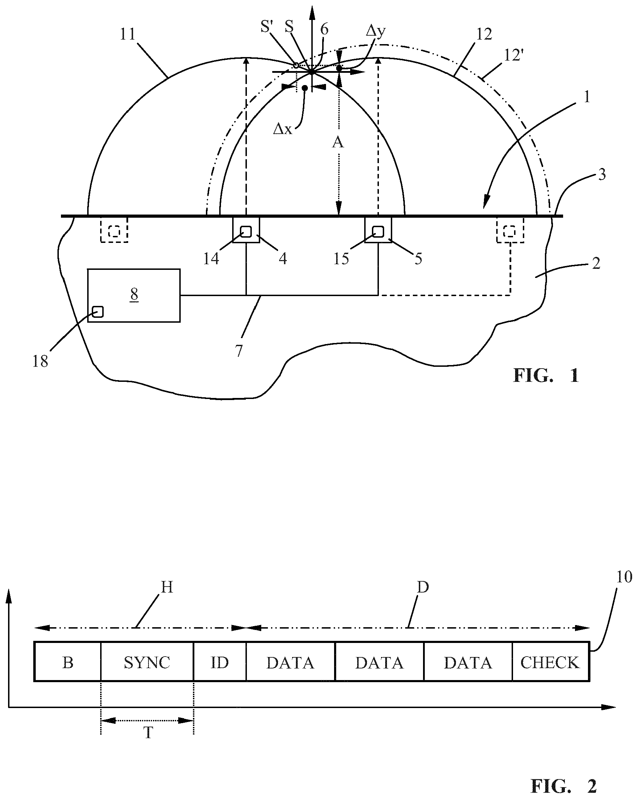

In Fig. 1 ist ein ultraschallbasiertes Umfelderkennungssystem 1 dargestellt, welches in einem schematisch angedeuteten Fahrzeug 2 angeordnet ist. So können in einer Stoßstange 3 des Fahrzeugs 2 ein oder mehrere Sensoren 4, 5, z. B. Ultraschallsensoren angeordnet werden, die zur Erkennung eines Objektes 6 im Nahbereich der Sensoren 4 und 5 vorgesehen sind. Im gezeigten Ausführungsbeispiel sind zwei Sensoren 4 und 5 dargestellt; es können weitere Sensoren vorgesehen sein, wie in Fig. 1 strichliert angedeutet ist.

Die dargestellten Sensoren 4 und 5 sind über einen Bus 7 mit einem Steuergerät 8 verbunden, welches als zentrales Steuergerät 8 im Fahrzeug 2 angeordnet ist und den Master des Busses 7 bildet.

Der Bus 7 kann ein CAN-Bus, ein LIN-Bus oder entsprechend geeigneter Bus sein.

Die vom Sensor ausgesandten Ultraschallwellen werden von einem Objekt 6 reflektiert, wobei die Laufzeiten der Ultraschallwellen im Sensor 4, 5 selbst ermittelt werden. Hierzu ist in jedem einzelnen Sensor 4 bzw. 5 ein Zeitmesser 14 bzw. 15 vorgesehen, der z. B. in bekannter Weise als Oszillator ausgebildet ist. Die von den Sensoren 4 und 5 gesendeten Daten sind die vom Sensor erfassten Laufzeiten der Ultraschallwellen, wozu der interne Zeitmesser des einzelnen Sensors genutzt wird. Da der Oszillator des Zeitmessers 14, 15 bauartbedingt oder aufgrund von Alterung, Temperatureinflüssen und dgl. in der Praxis driftet, sind die vom Sensor ausgegebenen Laufzeiten abhängig von der im Zeitpunkt der Messung bestehenden Oszillatordrift; aufgrund der Oszillatordrift können die gemessenen Laufzeiten ungenau sein, so dass das zu erfassende Objekt 6 mit einem falschen Abstand A von der Stoßstange 3 des Fahrzeugs 2 berechnet wird.

Werden - wie in Fig. 1 dargestellt - zwei Sensoren 4 und 5 verwendet, dann entspricht der Schnittpunkt der beiden erfassten Abstandswerte 11 und 12 genau der Position des realen Objektes 6.

Weist z. B. der Zeitmesser 15 eine Oszillatordrift von z. B. +3% auf, so ergibt sich ein Abstandswert 12' mit der Folge, dass sich der Schnittpunkt S zum Schnittpunkt S' verschiebt, d. h. die Position des Objektes 6 wird um die Koordinaten Δx und Δy falsch berechnet.

Um eine Synchronisation der Zeitmesser 14 und 15 der Sensoren 4 und 5 zu erreichen, wird vorgesehen, die Zeitmesser 14 und 15 in den Sensoren 4 und 5 mit dem Takt des zentralen Zeitmessers 18 im Steuergerät 8 abzugleichen. Dabei wird aus einem Abgleich jeweils ein Korrekturfaktor für die Daten eines jeden einzelnen Sensors 4 und 5 berechnet.

Für einen Abgleich wird eine Information des Steuergerätes 8 (Master) an den Sensor 4 bzw. 5 (Slave) vom Zeitmesser 14 bzw. 15 des Sensors 4 bzw. 5 gemessen, wobei die Länge der Information des Steuergerätes 8 (Master) bekannt sein muss. Hierzu eignen sich vorteilhaft lange Informationen von mehreren Bits.

In Fig. 2 ist schematisch das Bespiel eines Protokolls auf dem Bus 7 wiedergegeben. Jeder Message Frame 10 besteht aus einem Header H und einem Datenabschnitt D. Der Header H umfasst z. B. ein Break-Fenster B, ein Synchronisationsfenster SYNC sowie einen Identifier ID; der Datenabschnitt D umfasst ein oder mehrere Datenfenster DATA sowie ein den Datenabschnitt D abschließendes Fenster CHECK für die Checksumme. Jedes Fenster B, SYNC, ID, DATA und CHECK hat eine vorgegebene, feste Zeit, z. B. das Fenster SYNC die Zeit T.

Auf einen Header H des Steuergerätes 8 wird mittels des Identifiers ID der jeweilige Sensor 4 bzw. 5 angesprochen, der daraufhin seine Daten - z. B. die Laufzeiten der Ultraschallwellen - ausgibt, die als Datenfenster von der zentralen Steuereinheit 8 empfangen werden.

Im Ausführungsbeispiel wird zur Synchronisation der Zeitmesser 14, 15 in den Sensoren 4, 5 das Fenster SYNC mit der Zeit T des Steuergerätes 8 (Master) von den Zeitmessern 14 und 15 der Sensoren 4 und 5 (Slave) gemessen und im Sensor 4 bzw. 5 zur Verfügung gehalten. Die jeweils gemessene Zeit des SYNC-Fensters wird zusammen mit den Daten des Sensors 4 bzw. 5, also den Laufzeiten der Ultraschallwellen dem Steuergerät 8 (Master) übermittelt.

Das Steuergerät 8 (Master) kennt die Zeit T des Fensters SYNC und vergleicht diese mit der von einem Zeitmesser 14 bzw. 15 eines Sensors 4 bzw. 5 gemessenen Zeit. Aus der Differenz der im Steuergerät 8 bekannten Zeit T zu der durch die Sensoren 4 und 5 gemessenen Zeit wird eine Differenzzeit ermittelt, die zur Korrektur der vom Sensor übermittelten Laufzeitdaten der Ultraschallwellen herangezogen wird. Die von den Zeitmessern 14 und 15 gemessene Zeit wird somit zur Korrektur des Zeitmessers des Sensors und dessen gesendeten Daten herangezogen.

Da das Steuergerät 8 (Master) sowohl die gemessenen Zeiten des Fensters SYNC als auch die Laufzeiten der Ultraschallwellen der Sensoren 4 und 5 über den Bus 7 empfängt, kann im Steuergerät 8 die Korrektur der Laufzeiten der Ultraschallwellen der Sensoren 4 und 5 aus der Differenz der Zeit T zu der von den Zeitmessern 14 und 15 gemessenen Zeit erfolgen.

Als Fenster zur Korrektur der Laufzeiten kann jedes Fenster des Message Frames 10 verwendet werden, sofern das Fenster eine vom Master (Steuergerät 8) fest vorgegebene zeitliche Länge hat. Zweckmäßig ist das Fenster ein Synchronisationsfenster im Header H, z. B. das Break-Fenster B, das Synchronisationsfenster SYNC oder der Identifier ID; es kann auch vorteilhaft sein, das Datenfenster DATA oder das Fenster CHECK der Checksumme durch den Zeitmesser 14, 15 in einem Sensor 4, 5 zu erfassen, um einen Abgleich des Zeitmessers 14, 15 im Sensor 4, 5 mit dem Zeitmesser 18 im Steuergerät 8 durchzuführen. Eine aus dem Abgleich sich ergebende Differenzzeit wird in einen Korrekturwert umgerechnet, der zur Korrektur der Laufzeitdaten der Sensoren 4 und 5 herangezogen wird.

Die gemessene Zeit des ausgewählten Fensters, z. B. des Fensters SYNC, und ein gesendeter Datensatz des Sensors 4 bzw. 5, z. B. die Laufzeiten der Ultraschallwellen, werden vorteilhaft innerhalb eines gleichen Message Frames 10 übermittelt. Es kann auch zweckmäßig sein, die gemessene Zeit eines Fensters und den abgefragten Datensatz des Sensors 4, 5 in aufeinanderfolgenden Message Frames 10 zu übermitteln.

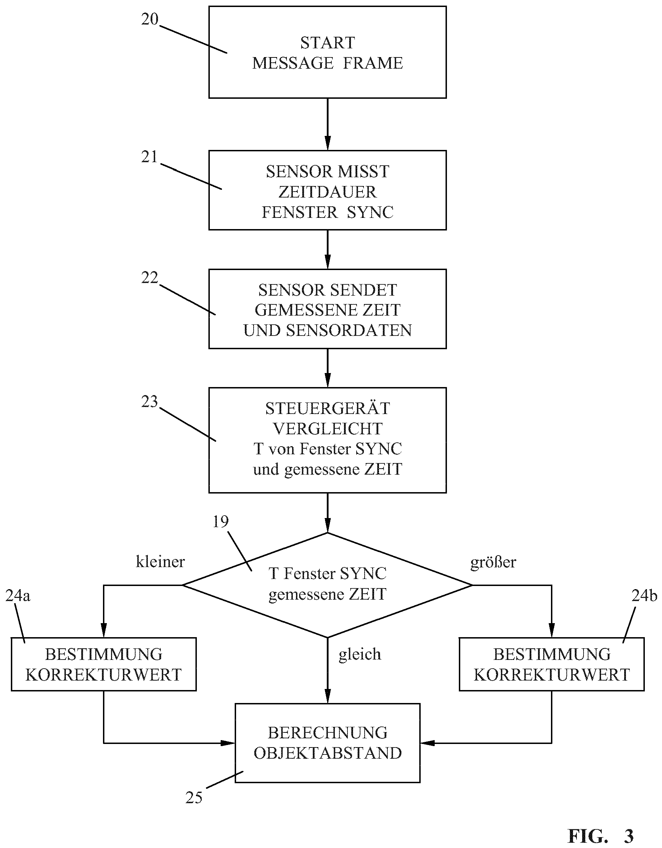

Wie in Fig. 3 dargestellt, wird im Startfeld 20 vom Steuergerät 8 (Master) auf dem Bus 7 ein Header H eines Message Frames 10 gesendet; der Sensor 4, 5 (Slave) misst im Feld 21 die Zeit des Fensters SYNC im Header H. Der Sensor 4, 5 (Slave) sendet im Feld 22 sowohl die gemessene Zeit des Fensters SYNC und die vom Sensor 4, 5 erfassten Daten in einem oder mehreren Datenfeldern DATA. Das Steuergerät 8 (Master) vergleicht im Feld 23 die ihm bekannte Zeit T des Fensters SYNC mit der vom Slave gemessenen Zeit; ist die Zeit gleich, ist keine Korrektur notwendig, und der Objektabstand kann im Feld 25 unmittelbar aus den gesendeten Daten des Sensors 4, 5 berechnet werden. Ist die gemessene Zeit größer, wird die Entscheidungsraute 19 über die Bestimmung eines Korrekturwertes im Feld 24b verlassen und unter Verwendung des Korrekturwertes aus Feld 24b im Feld 25 der Objektabstand berechnet. Entsprechend wird ein Korrekturwert im Feld 24a bestimmt, wenn die gemessene Zeit kleiner als die Zeit T des Fensters SYNC ist und danach unter Verwendung des Korrekturwertes aus Feld 24a der Objektabstand im Feld 25 berechnet.

## Patentansprüche

1. Verfahren zur Synchronisation von Sensoren (4, 5) mit einem eigenständigen Zeitmesser (14, 15), insbesondere für ultraschallbasierende Umfelderkennungssysteme (1) in einem Fahrzeug (2), bei dem die Sensoren (4, 5) mit einem Steuergerät (8) über einen Bus (7) mit einem Bus-Protokoll kommunizieren, das zumindest ein Fenster (SYNC) vorgegebener zeitlicher Länge (T) umfasst,
wobei der Takt des Zeitmessers (14, 15) im Sensor (4, 5) mit dem Takt eines zentralen Zeitmessers (18) im Steuergerät (8) abgeglichen wird und aus dem Abgleich ein Korrekturfaktor für die Daten des Sensors (4, 5) berechnet wird und wobei die zeitliche Länge (T) des Fensters (SYNC) vom Zeitmesser (14, 15) des Sensors (4, 5) gemessen wird und die gemessene Zeit dem Steuergerät (8) übermittelt wird,
**dadurch gekennzeichnet, dass** die gemessene Zeit zur Korrektur des Zeitmessers (14, 15) des Sensors (4, 5) und dessen gesendeter Daten herangezogen wird.

2. Verfahren nach Anspruch 1,
**dadurch gekennzeichnet, dass** die gemessene Zeit zusammen mit den Daten des Sensors (4, 5) dem Steuergerät (8) übermittelt wird.

3. Verfahren nach einem der Ansprüche 1 bis 2,
**dadurch gekennzeichnet, dass** die gemessene Zeit des Fensters (SYNC) mit der im Protokoll vorgegebenen Zeit (T) des Fensters (SYNC) verglichen und eine Differenzzeit ermittelt wird, die zur Korrektur der vom Sensor (4, 5) übermittelten Daten herangezogen wird.

4. Verfahren nach einem der Ansprüche 1 bis 3,
**dadurch gekennzeichnet, dass** die Korrektur der Daten im zentralen Steuergerät (8) erfolgt.

5. Verfahren nach einem der Ansprüche 1 bis 4,
**dadurch gekennzeichnet, dass** das Fenster (SYNC) das Synchronisationsfenster im Header (H) ist.

6. Verfahren nach einem der Ansprüche 1 bis 4,
**dadurch gekennzeichnet, dass** das Fenster ein Datenfenster oder das Fenster der Checksumme ist.

7. Verfahren nach einem der Ansprüche 1 bis 6,
**dadurch gekennzeichnet, dass** die gemessene Zeit des Fensters und ein Datensatz des Sensors (4, 5) innerhalb eines gleichen Message Frames (10) übermittelt sind.

8. Verfahren nach einem der Ansprüche 1 bis 6,
**dadurch gekennzeichnet, dass** die gemessene Zeit des Fensters (SYNC) und ein Datensatz des Sensors (4, 5) in aufeinanderfolgenden Message Frames (10) übermittelt werden.

## Claims

1. Method for synchronizing sensors (4, 5) having an independent timer (14, 15), in particular for ultrasound-based environment detection systems (1) in a vehicle (2), in which the sensors (4, 5) communicate with a control device (8) via a bus (7) using a bus protocol comprising at least one window (SYNC) of prescribed temporal length (T), wherein the clock of the timer (14, 15) in the sensor (4, 5) is compared against the clock of a central timer (18) in the control device (8) and the comparison is used to calculate a correction factor for the data of the sensor (4, 5) and wherein the temporal length (T) of the window (SYNC) is measured by the timer (14, 15) of the sensor (4, 5) and the measured time is transmitted to the control device (8),
**characterized in that** the measured time is used to correct the timer (14, 15) of the sensor (4, 5) and the transmitted data thereof.

2. Method according to Claim 1,
**characterized in that** the measured time is transmitted to the control device (8) together with the data of the sensor (4, 5).

3. Method according to either of Claims 1 and 2,
**characterized in that** the measured time of the window (SYNC) is compared with the time (T) of the window (SYNC), which time is prescribed in the protocol, and a difference time is ascertained that is used to correct the data transmitted by the sensor (4, 5).

4. Method according to one of Claims 1 to 3,
**characterized in that** the data are corrected in the central control device (8).

5. Method according to one of Claims 1 to 4,
**characterized in that** the window (SYNC) is the synchronization window in the header (H).

6. Method according to one of Claims 1 to 4,
**characterized in that** the window is a data window or the window of the checksum.

7. Method according to one of Claims 1 to 6,
**characterized in that** the measured time of the window and a data record of the sensor (4, 5) are transmitted within a same message frame (10).

8. Method according to one of Claims 1 to 6,
**characterized in that** the measured time of the window (SYNC) and a data record of the sensor (4, 5) are transmitted in successive message frames (10).

## Revendications

1. Procédé de synchronisation de capteurs (4, 5) avec une minuterie autonome (14, 15), en particulier pour des systèmes de reconnaissance d'environnement à base d'ultrasons (1) dans un véhicule (2), dans lequel les capteurs (4, 5) communiquent avec un appareil de commande (8) via un bus (7) avec un protocole de bus, qui comprend au moins une fenêtre (SYNC) de longueur temporelle prédéterminée (T), dans lequel la cadence de la minuterie (14, 15) dans le capteur (4, 5) est comparée à la cadence d'une minuterie centrale (18) dans l'appareil de commande (8) et on calcule à partir de la comparaison un facteur de correction pour les données du capteur (4, 5) et dans lequel on mesure la longueur temporelle (T) de la fenêtre (SYNC) au moyen la minuterie (14, 15) du capteur (4, 5) et on transmet le temps mesuré à l'appareil de commande (8), **caractérisé en ce que** l'on utilise le temps mesuré pour la correction de la minuterie (14, 15) du capteur (4, 5) et de ses données envoyées.

2. Procédé selon la revendication 1, **caractérisé en ce que** l'on transmet le temps mesuré en même temps que les données du capteur (4, 5) à l'appareil de commande (8).

3. Procédé selon une des revendications 1 à 2, **caractérisé en ce que** l'on compare le temps mesuré de la fenêtre (SYNC) avec le temps (T) de la fenêtre (SYNC) prédéterminé dans le protocole et on détermine un temps différentiel, que l'on utilise pour la correction des données transmises par le capteur (4, 5).

4. Procédé selon l'une quelconque des revendications 1 à 3, **caractérisé en ce que** l'on effectue la correction des données dans l'appareil de commande central (8).

5. Procédé selon l'une quelconque des revendications 1 à 4, **caractérisé en ce que** la fenêtre (SYNC) est la fenêtre de synchronisation dans l'en-tête (H).

6. Procédé selon l'une quelconque des revendications 1 à 4, **caractérisé en ce que** la fenêtre est une fenêtre de données ou la fenêtre de la somme de contrôle.

7. Procédé selon l'une quelconque des revendications 1 à 6, **caractérisé en ce que** le temps mesuré de la fenêtre et un ensemble de données du capteur (4, 5) sont transmis à l'intérieur d'une même trame de message (10).

8. Procédé selon l'une quelconque des revendications 1 à 6, **caractérisé en ce que** l'on transmet le temps mesuré de la fenêtre (SYNC) et un ensemble de données du capteur (4, 5) dans des trames de message successives (10).
